# EUROPÄISCHE PATENTANMELDUNG

(11) **EP 1 161 873 A1**
(43) Veröffentlichungstag der Anmeldung: **12.12.2001**
(21) Anmeldenummer: 01111500.3
(22) Anmeldetag: 11.05.2001
(51) Int. Cl.: A21D 8/06, A21D 15/02

(54) **Backverfahren mit einer Vakuumabkühlungsstufe**

(30) Priorität: 06.06.2000 CH 11132000
(71) Anmelder: Cermak, Adolf, 9450 Altstätten (CH)
(72) Erfinder: Cermak, Adolf, 9450 Altstätten (CH)
(74) Vertreter: Römpler, Aldo

(57) **Zusammenfassung**

Backwaren, wie z.B. Brot, Kleingebäck und ähnliches, werden während 40 - 50 % der sonst üblichen Backzeit vorgebacken, danach einer Vakuumabkühlung unterzogen, wobei innert 2 - 4 Minuten eine Temperatur von vorzugsweise 2° - 4° C bei einem Druck von 12 mbar erreicht wird. Gegebenenfalls nach Lagerung und/oder Transport werden die Backwaren verkaufs- bzw. verzehrfertig nachgebacken. Die Gesamtbackzeit ist deutlich kürzer, dadurch höhere Auslastung der Ofenkapazitäten. Da keine Tiefkühlung erforderlich ist, ergibt sich eine Energieersparnis sowie eine vereinfachte Logistik. Besonders vorteilhaft sind das grössere Volumen und die bessere Formgebung der Backwaren, die knusprige Kruste und die längere Haltbarkeit bei höheren Temperaturen.

## Beschreibung

Die vorliegende Erfindung betrifft ein Backverfahren.

Es ist bekannt Backwaren, wie beispielsweise Brot, Brötchen, sonstiges Kleingebäck, Plunder und ähnliches, in der Bäckerei bzw. im Backbetrieb vorzubacken, in einem Schockfroster bei Temperaturen um -30° C innerhalb kurzer Zeit, beispielsweise innerhalb 30 Minuten für ein Brötchen von ca 60 g, auf eine Kerntemperatur von ca -7° C zu bringen und anschliessend verpackt bei -18° bis -2° C bis zum Fertigbacken zu lagern. Nach dem Auftauvorgang, der entweder vor dem eigentlichen Backen oder im Rahmen eines speziellen Backprogramms direkt im Ofen stattfinden kann, wird das Produkt fertiggebacken.

Die nach dieser Methode behandelten Backwaren werden in der ersten Backphase zwischen 65 und 90 % gebacken, weil bei einem geringeren Ausbackgrad die nötige Stabilität von Krume und Kruste noch nicht gegeben ist. Der damit einher gehende grosse Kühlaufwand bringt nicht nur bei der Lagerung in der Bäckerei bzw. im Backbetrieb erhebliche Nachteile mit sich, sondern insbesondere während des darauf folgenden Transportes zu den Verkaufsstellen, wie beispielsweise Tankstellen, sind für eine derartige Lagerung nicht eingerichtet. Ein weiterer Nachteil liegt darin, dass das Aussehen und das Volumen der Backwaren unter diesem Gefrierverfahren leidet. Insbesondere neigen die Backwaren dazu, zusammenzufallen. Diese Nachteile können nach dem bisherigen Stand der Technik auch durch ein nochmaliges Erwärmen/Aufbacken der Backwaren nicht behoben werden. Nach dem Qualitätsempfinden des Kunden, entsprechen die dem Schockfrosten unterworfenen und tiefgekühlten Backwaren, selbst wenn bei der Lagerung und dem Transport optimale Bedingungen herrschen, niemals den Frischbackwaren.

Da eine natürliche Abkühlung der aus dem Backofen kommenden Backwaren viel Zeit, d.h. bis zu 3 - 4 Stunden in Anspruch nimmt, wurde des weiteren vorgeschlagen, nach dem Backen im Backbetrieb eine Vakuumkühlung vorzunehmen. Bei dieser besonderen Art von Backverfahren beträgt die Backzeit ca 80 - 90 % der für das jeweilige Produkt beim normalen Backen üblichen Backzeit. Der Sinn des Vakuum-Backverfahrens liegt darin, dass durch die Beschleunigung der Abkühlung die Backwaren, insbesondere Brot, schnittfest gemacht werden können, so dass sie rasch geschnitten, verpackt und ausgeliefert werden können. Die aus dem Backofen kommenden, heissen Backwaren werden dabei auf +25° bis +30° C gebracht, d.h. annähernd auf Raumtemperatur.

Sogenannte Teiglinge lassen sich nach den obigen Methoden nicht ohne irreparable Schäden tiefkühlen, auch nicht abkühlen, denn erstens kommt es während des Abkühlvorganges durch das ständige Herabsetzen des Siedepunktes zu einem "Kochvorgang", d.h. der Teig erfährt eine Strukturveränderung, die eine spätere Volumenzunahme nicht mehr zulässt. Ausserdem entspricht die beim Backprozess entstehende Farbe eines solcherart behandelten Teiglings nicht mehr dem, was ein Konsument erwartet. Zweitens würde dem Teigling, da ein grosser Kältebedarf gedeckt werden muss, zu viel Feuchtigkeit entzogen. Drittens vergrössert sich während des Kühlvorgangs das Volumen des Teiglings und aufgrund der instabilen Struktur kommt es während des Druckausgleiches in der Vakuumkammer zu bleibenden Deformierungen bis zur vollständigen Zerstörung. Sogenanntes "Halbgebackenes" unter Vakuum zu frosten ist ebenfalls nicht möglich, der benötigte Feuchtigkeitsanteil wäre hier so gross, dass nur Paniermehl übrigbleibt.

Die Erfindung stellt sich daher die Aufgabe, ein Backverfahren zu schaffen, das die vorgenannten Nachteile nicht aufweist, wobei sowohl das Backen, der Transport und die Lagerung vereinfacht als auch die Qualität des Endproduktes gesteigert wird.

Der erfindungsgemässe Verfahren entspricht den kennzeichnenden Merkmalen des Patentanspruchs 1. Weitere vorteilhafte Ausbildungen gehen aus den abhängigen Patentansprüchen hervor.

Nach diesem Backverfahren werden die Backwaren, zum Beispiel Brot, teilgebacken, bzw. vorgebacken, danach in einer Vakuumkühlanlage gekühlt, nicht aber gefroren, und schliesslich - gegebenenfalls nach Lagerung und/oder Transport - fertig- bzw. nachgebacken.

Durch dieses Backverfahren ist es möglich, Ergebnisse zu erzielen, die nach dem bisherigen Stand der Technik nicht möglich waren, auch nicht für möglich gehalten wurden. Insbesondere zur Einhaltung der in den abhängigen Patentansprüchen aufgeführten Verfahrensschritte ist eine Vakuumkühlanlage erforderlich, die das Einhalten der im Verfahren angegebenen Werte ermöglicht. Der Druck muss so weit abgesenkt werden können, dass der Wasserdampf entweicht, wobei durch die Verwendung geeigneter, der Vakuumpumpe vorgelagerter, vorzugsweise regenerierbarer Adsorptionsmittel, die Dimensionierung der Vakuumpumpe in Grenzen gehalten werden kann. Die bei den bisher bekannten Vakuum-Backverfahren gebräuchlichen Vakuumkühlanlagen sind nicht in jedem Fall geeignet. Hingegen braucht dabei nicht auf die Erreichbarkeit von Tiefkühlwerten geachtet werden, so dass in diesem Bereich etliche Probleme entfallen.

Durch das vorliegende Backverfahren wird ein Produkt hergestellt, das - im Gegensatz zu den bisher bekannten Vakuum-Backverfahren - bei Temperaturen über 0° C über mehrere Tage lagerfähig ist, ohne an Frische, Geschmack, Aroma und Haltbarkeit im Vergleich zu Tiefkühl-Backwaren zu verlieren. Die bisherigen Erkenntnisse weisen - im Gegenteil - darauf hin, dass zu den vorgenannten Eigenschaften wesentliche Verbesserungen in bezug auf Volumen, optischen Gesamteindruck und Stand möglich sind. Ausserdem kann bewiesen werden, dass durch dieses Verfahren - bedingt durch den Wegfall des Schockfrost-Prozesses und der Notwendigkeit in Tiefkühlräumen bei -20° C zu lagern - drastische Einsparungen bei Energie- und Unterhaltskosten sowie bei Investitionen erzielt werden können. Dazu kommt noch, dass auch die Auslieferung zu den Filialen oder Backläden in normalen anstatt in Tiefkühlfahrzeugen bewerkstelligt werden kann. Dies ist auch logistisch ein Vorteil, da alle Produkte - die gekühlten und ungekühlten - im gleichen Fahrzeug ausgeliefert werden können. In den Verkaufsläden oder Filialen entfällt die Notwendigkeit von Tiefkühl-Schränken oder -Räumen. Zudem wird der Nachschub beschleunigt, da der Auftauprozess entfällt. Im Gegensatz zum eingangs erwähnten Aufbacken von Teiglingen, mit all den damit zusammenhängenden, komplizierten Nebenerscheinungen, kann in diesem Bereich normales Verkaufspersonal eingesetzt werden, ohne Probleme beim Nachbacken befürchten zu müssen.

Das erfindungsgemässe Backverfahren kann für alle Brot und Gebäcksorten angewendet werden, ohne dass zur Teigherstellung irgendwelche Back- und sonstige Hilfsmittel erforderlich wären. Für Tiefkühlprodukte werden bisher in fast allen Fällen stabilisierende Backmittel eingesetzt.

Trotz zweimaligen Backens ist wesentlich weniger Backzeit erforderlich. Dem Kunden kann jedoch eine frische Ware, bzw. ein frisches Brot in hervorragender Qualität präsentiert werden.

Der Gesamtökologische Aspekt dieses Backverfahrens umfasst also nicht nur die Reduktion des Gesamt-Energieverbrauches für den Kühl- und Lagerprozess an sich, sondern darüber hinaus auch die geringeren Energiekosten für Vor- und Nachbacken, den Gewinn an Ofenkapazität - die bei Umsatzsteigerungen oft eine Neuinvestition unnötig machen - und den Wegfall der Notwendigkeit, Tiefkühl-Fahrzeuge einzusetzen. Der Gesamt-Energieverbrauch kann um 50 %, bei einigen Produkten sogar um 75 % verringert werden. Ausserdem ist für die Abkühlphase in der Vakuumkühlanlage, die mit relativ kleinen Anschlusswerten und dem Kältemittel Wasser arbeitet, ein Wegfall an den in den üblichen Kälteanlagen verwendeten Kältemitteln, Kälteöl, aufwendigen Rohrleitungen und deren Isolierung verbunden. Die Umweltbelastung, die durch spätere Entsorgung dieser Materialien und Betriebsstoffe anfällt, existiert beim erfindungsgemässen Backverfahren nicht. Da bei diesem Verfahren zudem Mehrweggebinde - anstelle der sonst notwendigen Kartons und PVC-Folien für die Tiefkühl-Verpackung - verwendet werden können, entfällt eine riesige Menge an zu entsorgendem Packmaterial.

Ein bevorzugtes Ausführungsbeispiel des erfindungsgemässen Verfahrens wird nachfolgend, gegliedert nach den einzelnen Verfahrensschritten, näher beschrieben.

### Vorbacken:

Die Backwaren werden zu 40 - 50% der für das betreffende Produkt üblichen Gesamtbackzeit vorgebacken. Idealerweise sollte der Vorbackgrad so gewählt werden, dass keine oder nur geringe Farbbildung eintritt. Man spricht hier von "weissgebackener" Ware. Wenn aber ausdrücklich Farbbildung gewünscht wird, ist auch das möglich. Grundsätzlich gilt: Je weniger vorgebacken, desto besser die Qualität des Endproduktes. Wichtig ist, dass in jedem Fall eine Kerntemperatur von 98° C erreicht wird.

Eine derart kurz gebackene Ware ist, was Krumen- und Krustenstruktur betrifft, noch so instabil, dass Lagerung, Transport und neuerliche Lagerung nach bisherigem Stand der Technik nur in tiefgefrorenem Zustand möglich ist. Darum folgt erfindungsgemäss eine Schnellabkühlung.

### Vakuumabkühlung:

Das unmittelbar aus dem Ofen kommende, zu 40 - 50 % vorgebackene Produkt, wird in eine Vakuumkühlanlage eingebracht und deren Druck in 1 - 10, vorzugsweise jedoch in 2 - 4 Minuten so weit abgesenkt, dass im Produkt eine Kerntemperatur von über 0° C, vorzugsweise +2° bis +10° C, je nach Produktbeschaffenheit, erreicht wird. Der dazugehörige Enddruck, d.h. tiefste Druck in der Vakuumkammer, liegt dabei vorzugsweise zwischen 8 und 20 mbar und wird, wiederum produktspezifisch über einen Zeitraum von 10 bis 60 Sekunden gehalten und dann mit Umgebungsluft oder je nach Weiterverarbeitung mit keimarmer Luft oder Schutzgas ausgeglichen.

Durch das extrem schnelle Abkühlen der Backwaren, in ca 2 - 4 Minuten von +95° auf +2° C, und zwar von innen nach aussen, im Gegensatz zur konventionellen Kühlung, kommt es zu keiner, beziehungsweise zu einer wesentlich geringeren Feuchtigkeitswanderung von der Krume zur Kruste und damit zu einem optimalen Frischeempfinden nach dem Nachbacken.

Es erfolgt zudem eine Verzögerung des Alterungsprozesses, bzw. der Retogradation der Stärke, der normalerweise bei Abkühlen der gebackenen Ware ab ca 60° C beginnt. Bei dieser Temperatur geht das Struktur-System der Backware in einen thermodynamisch unstabilen Zustand über und darauf beruht die eigentliche Retogradation der Stärke. Es kommt dabei partiell zu Kristallisationsprozessen und damit zu einer Dehydratisierung, d.h. Wasser wird zunehmend aus dem Stärkegel ausgelagert.

Dadurch, dass beim erfindungsgemässen Verfahren der Siedepunkt des Wassers mit der Temperatur gleichlaufend abgesenkt wird - bei Erreichen des Vakuum-Enddruckes von z.B. 12 mbar entsprechen Kerntemperatur und Siedepunkt einander - wird dieser Vorgang während der Abkühlphase weitgehend verhindert und durch die intensive Verkleisterung der Stärke auch in der Folge verlangsamt.

Die Produkte können nach der Vakuumabkühlung entweder weiter behandelt werden, beispielsweise geschnitten und in Folien verpackt oder in Mehrweggebinde verpackt und dem nächsten Verfahrensschritt zugeführt werden.

### Lagerung:

Die verpackten Backwaren werden in einem Lagerraum - möglichst unter Berücksichtigung des First in, fist out Prinzips - bei einer Raumtemperatur von vorzugsweise +2° bis +4° C und einer hohen relativen Luftfeuchtigkeit von ca 90° bis 95° C beispielsweise bis zur Auslieferung aufbewahrt. Die Gesamt-Lagerdauer bis zum Nachbacken kann produktspezifisch in jedem Fall mindestens 4 Tage und bis zu 2 - 3 Wochen betragen.

Für die Auslieferung an Filialen, Backläden oder Restaurants genügt ein ungekühltes Transportfahrzeug. Die anschliessende Lagerung bis zum Backen soll ebenfalls bei annähernd +2° bis +4° C bei oben erwähnter Luftfeuchtigkeit erfolgen.

Zum Transport und der Lagerung sei noch erwähnt, dass es heute preiswerte Kühlcontainer in Form von fahrbaren Isolierbehältern ohne Eigenkühlung gibt. Wird nun die zu transportierende Backware samt dem Gebinde aus dem +2° C - Lager direkt in einen solchen Isolierbehälter gegeben, bleibt die Produkttemperatur während des Transportes sicher unter +10° C. Nach Anlieferung können dieselben Isolierbehälter im Laden als temporäre Lagereinheiten verbleiben. Auf diese Art und Weise kann die dortige Aufbewahrungszeit der erfindungsgemäss vorbehandelten Backwaren, ohne eigentliche Kühlung, auf mindestens 24 bis 36 Stunden bis zum Nachbackzeitpunkt ausgedehnt werden. In einem solchen Fall benötigt man im Laden weder Kühl noch Tiefkühlkapazität, was die Betriebskosten und den ökologischen Aspekt nochmals positiv beeinflusst.

Eine kurzzeitige Lagerung bei Raumtemperatur, d.h. bis zu einigen Stunden, ist tolerierbar, ohne dass das Endprodukt grösseren Schaden nimmt.

### Nachbacken:

Durch das Nachbacken werden die Backwaren, zum Beispiel das Brot, verkaufs- bzw. verzehrfertig. Auch nach Beendigung dieser zweiten Backphase ist die übliche Backzeit um ca 25 - 40 % verringert. Gegebenenfalls muss beim Nachbacken die Backtemperatur leicht erhöht werden, vorzugsweise um 10° bis 15° C, um trotz verkürzter Backzeit die gewünschte Farbgebung sicherzustellen.

Die konsequente Beachtung dieses Backverfahrens sichert, trotz Verzicht auf Schockfroster und Tiefkühllagerung, ein Qualitätsniveau, das der Tiefkühlware in nichts nachsteht. Was den optischen Eindruck, den Geschmack und das Frischhaltevermögen betrifft, sind sogar erhebliche Vorteile zu erkennen. Tatsächlich ist das Frischhaltevermögen nach dem Nachbacken, aufgrund des niedrigen Vorbackens, der intensiveren Verkleisterung der Stärke und der während der Abkühlphase praktisch nicht vorhandenen Retogradation deutlich besser als bei allen getesteten Tiefkühl-Produkten. Es ist auch mehr Volumen bei gleichem Gewicht und eine volle, bleibende Form gegeben, da die Kruste stabiler und dennoch knuspriger ist.

Aus diesen Ausführungen ergibt sich, dass nicht nur Herstellungs-, Kühlungs-, Transport-, Lagerungs- und Verkaufsvorteile gegeben sind. Die nach dem Verfahren hergestellten Backwaren unterscheiden sich sowohl für den Kunden als auch hinsichtlich deren überprüfbarer Beschaffenheit in positiver Weise von den herkömmlichen, schockgefrosteten und tiefkühlgelagerten Produkten.

## Patentansprüche

1. Backverfahren, **dadurch gekennzeichnet, dass** die Backwaren vorgebacken und einer Vakuumabkühlung unterzogen werden, wobei das derart hergestellte Halbfertigprodukt danach nachgebacken wird.

2. Backverfahren nach Anspruch 1, **dadurch gekennzeichnet, dass** die Vorbackzeit der Backwaren so gewählt wird, dass sie bei 30 - 60 % der für das jeweilige Produkt erforderlichen Backzeit bei normalem Ofenbacken liegt.

3. Backverfahren nach Anspruch 2, **dadurch gekennzeichnet, dass** die Vorbackzeit der Backwaren so gewählt wird, dass sie bei 40 - 50 % der für das jeweilige Produkt erforderlichen Backzeit bei normalem Ofenbacken liegt.

4. Backverfahren nach einem der Ansprüche 1- 3, **dadurch gekennzeichnet, dass** die Vakuumabkühlung so ausgelegt ist, dass die Kühltemperatur über 0° C liegt.

5. Backverfahren nach einem der Ansprüche 1 - 4, **dadurch gekennzeichnet, dass** bei der Vakuumabkühlung der Druck in 1 -10 Minuten so weit abgesenkt wird, bis die tiefste Temperatur erreicht ist.

6. Backverfahren nach Anspruch 5, **dadurch gekennzeichnet, dass** der Druck in 2 - 4 Minuten soweit abgesenkt wird, dass in den Backwaren eine Kerntemperatur von +2° bis +10° C erreicht ist.

7. Backverfahren nach Anspruch 1, 5 oder 6, **dadurch gekennzeichnet, dass** bei der Vakuumabkühlung der Enddruck, bzw. der tiefste Druck, zwischen 8 und 20 mbar liegt.

8. Backverfahren nach Anspruch 7, **dadurch gekennzeichnet, dass** bei der Vakuumabkühlung der Enddruck, bzw. der tiefste Druck, bei 12 mbar liegt.

9. Backverfahren nach Anspruch 1, 5, 6, 7 oder 8, **dadurch gekennzeichnet, dass** der bei der Vakuumabkühlung erreichte Enddruck, bzw. der tiefste Druck, über einen Zeitraum vom 10 - 60 Sekunden gehalten und dann ausgeglichen wird.

10. Backverfahren nach Anspruch 9, **dadurch gekennzeichnet, dass** der Druckausgleich entweder mit Umgebungsluft, keimarmer Luft oder Schutzgas erfolgt.

11. Backverfahren nach einem der Ansprüche 1 - 10, **dadurch gekennzeichnet, dass** die Backwaren vor dem Nachbacken gelagert und/oder transportiert werden, wobei die Lagertemperatur vorzugsweise bei 2° - 4° C liegt.

12. Backverfahren nach einem der Ansprüche 1 - 11, **dadurch gekennzeichnet, dass** die Backtemperatur des Vorbackens so gewählt wird, dass in den Backwaren eine Kerntemperatur von 98° C erreicht wird.

13. Backverfahren nach einem der Ansprüche 1 - 12, **dadurch gekennzeichnet, dass** die Backtemperatur des Nachbackens so gewählt wird, dass sie höher, vorzugsweise um 10° bis 15° C höher liegt, als die für die jeweiligen Backwaren erforderliche Backtemperatur bei normalem Ofenbacken.

14. Halbfertigprodukt zum Nachbacken als Zwischenprodukt im Verfahren nach Anspruch 1.
